# Europäisches Patentamt
# European Patent Office
# Office européen des brevets

(19)

(11) Numéro de publication: **0 084 741**
**B1**

(12) ## FASCICULE DE BREVET EUROPEEN

(45) Date de publication du fascicule du brevet:
**16.10.85**

(51) Int. Cl.⁴: **A 01 K 37/00,** A 61 D 3/00

(21) Numéro de dépôt: **82400786.8**

(22) Date de dépôt: **29.04.82**

(54) **Dispositif de contention d'oiseaux élevés, servant à l'insémination et à la récolte de semence de ces derniers.**

(30) Priorité: **27.01.82 FR 8201254**

(43) Date de publication de la demande:
**03.08.83 Bulletin 83/31**

(45) Mention de la délivrance du brevet:
**16.10.85 Bulletin 85/42**

(84) Etats contractants désignés:
**BE DE GB IT NL SE**

(56) Documents cités:
**US - A - 3 774 578**
**US - A - 3 872 869**

(73) Titulaire: **Cassou, Robert, Rue Clémenceau,
F-61300 L'Aigle (FR)**
Titulaire: **Cassou, Bertrand, Saint Symphorien des
Bruyeres, F-61300 L'Aigle (FR)**
Titulaire: **Cassou, Maurice, Rue Clémenceau,
F-61300 L'Aigle (FR)**

(72) Inventeur: **Cassou, Bertrand, Saint Symphorien des
Bruyeres, F-61300 l'Aigle (FR)**

(74) Mandataire: **Rodhain, Claude, Cabinet
Rodhain-Genestie 30, rue La Boétie, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un dispositif de contention d'oiseaux élevés, servant à l'insémination de volatiles femelles tels que poules, pintades, dindes et/ou à la récolte de la semence des mâles.

En aviculture, l'insémination artificielle est l'une des méthodes de reproduction utilisée couramment. Elle peut être pratiquée soit au sol, soit dans des batteries de cages individuelles ou collectives. Un problème important se pose au niveau de la quantité de main-d'œuvre nécessaire pour effectuer la récolte ou l'insémination qui est notamment déterminée par la méthode et la technologie mises en œuvre.

Actuellement, des appareils portatifs d'insémination et les méthodes modernes de travail permettent de n'utiliser souvent qu'un seul opérateur pour un nombre relativement important de volatiles. Mais ce dernier doit effectuer un certain nombre de mouvements tels que saisie, contention, récolte, insémination, etc., qui prennent du temps et doit en outre se déplacer devant les batteries de cages.

Ce problème est crucial dans le cas où l'on envisage l'insémination des poules, car la rentabilité de l'opération est déterminée par la rentabilité du travail qui, pour être efficace, doit être aussi peu contraignant pour l'opérateur que pour les animaux. Cela suppose que l'opérateur soit libéré des problèmes de contention et que ses déplacements ainsi que ceux des volatiles soient aussi limités que possible (gain de temps).

On connaît déjà différents appareils utilisés pour l'insémination de volatiles et/ou la récolte de la semence des mâles.

Par exemple, US-A-3.872.869 décrit un procédé et un appareil pour la récolte de la semence des volatiles mâles. L'appareil comprend un siège muni de roues pour être déplacé et portant un mécanisme de récolte de la semence, mais l'opérateur doit tout d'abord lier les pattes du volatile sur le bâti du siège puis le maintenir entre ses jambes pour avoir les mains libres.

On connaît également un appareil, décrit dans US-A-3.774.578, comportant un bâti rotatif présentant plusieurs systèmes verrouillables de rétention de volatiles pour les présenter individuellement devant les opérateurs.

Ces différents appareils ne satisfont pas aux impératifs actuels de rapidité et de facilité voulus pour un travail rentable en série.

C'est pourquoi un but de la présente invention est de fournir un dispositif de contention des volatiles qui laisse ces derniers près de leurs cages, en les soutenant et les maintenant pour permettre à l'opérateur d'intervenir avec ses deux mains pour récolter ou inséminer. Ledit dispositif de contention doit aussi permettre à l'opérateur de se déplacer le long des batteries à distance convenable et aux différents niveaux nécessaires.

Ce problème est résolu par la présente invention à l'aide d'un dispositif de contention d'oiseaux élevés, servant à l'opération d'insémination de volatiles femelles tels que poules, pintades, dindes et autres, et/ou à une opération de récolte de la semence des mâles, du type comportant des moyens verrouillables de contention temporaire des volailles et un moyen de transport apte à être déplacé manuellement, caractérisé en ce que ledit moyen de transport est constitué par un chariot mobile le long des batteries contenant les volatiles et comportant des moyens de guidage associés à la structure de ces batteries, ce chariot portant un organe de soutien et de positionnement des volatiles durant l'opération et de guidage de ceux-ci vers leur batterie lors de leur libération après l'opération, les moyens de contention verrouillables étant solidaires et réglables en position sur cet organe de soutien et de guidage, tout en étant réglables par ailleurs pour s'adapter aux volatiles.

Selon une variante préférée de réalisation de l'invention, l'organe de soutien, de positionnement et de guidage des volatiles est une planchette en forme de toboggan disposée en contrebas des moyens de contention des volatiles et dont l'inclinaison est réglable par rapport au chariot.

Grâce à cet agencement, l'opérateur ayant placé le chariot en position devant une batterie saisit un volatile par ses pattes, le pose contre la planchette et le fixe par ses pattes dans les moyens de contention, pratique l'insémination et débloque lesdits moyens, le volatile tombant alors dans sa cage sans aucune aide de l'opérateur.

Selon une forme de réalisation avantageuse, la planchette comporte des flasques latéraux et des empreintes légèrement en creux, prévus en un nombre égal à celui des moyens de contention des volatiles, les flasques et/ou les empreintes servant à guider les volatiles tombant sous l'action de leur propre poids lorsqu'ils sont libérés des moyens de contention.

En outre, de façon appropriée, les moyens de contention pour chaque volatile sont constitués par des pinces verticales, dont l'une est fixe et dont l'autre est mobile dans un support réglable sur une cornière horizontale solidaire de la planchette. Avantageusement, les pinces sont constituées par un sabot fixe solidaire du support réglable et par un sabot mobile dans un plan vertical autour d'un axe horizontal sous l'action d'un ressort de rappel, le sabot mobile comportant une partie évidée telle que, dans sa position fermée lorsqu'il est appliqué contre le sabot fixe, il délimite avec ce dernier une ouverture à peu près en forme de poire en coupe transversale verticale.

D'autres caractéristiques et avantages de l'invention ressortiront de la description qui va suivre, à titre d'exemple non limitatif, et en regard des dessins annexés, sur lesquels:

la fig. 1 montre une vue générale en perspective du dispositif conforme à l'invention;

la fig. 2 est une vue de profil du dispositif de la fig. 1, sans le chariot;

la fig. 3 est une vue en perspective schématique du dispositif de la fig. 2;

les fig. 4, 5, 6 sont respectivement une vue en élévation latérale, une vue de dessus et une vue de bout des moyens de contention d'un animal, prévus dans le dispositif selon l'invention des fig. 1 à 3;

la fig. 7 est une vue de dessus à plus grande échelle d'un détail des fig. 4 à 6;

la fig. 8 est une vue analogue à celle de la fig. 7 d'une variante de réalisation;

les fig. 9 et 10 montrent de manière schématique un système de liaison de plusieurs moyens de contention prévus pour maintenir plusieurs volatiles.

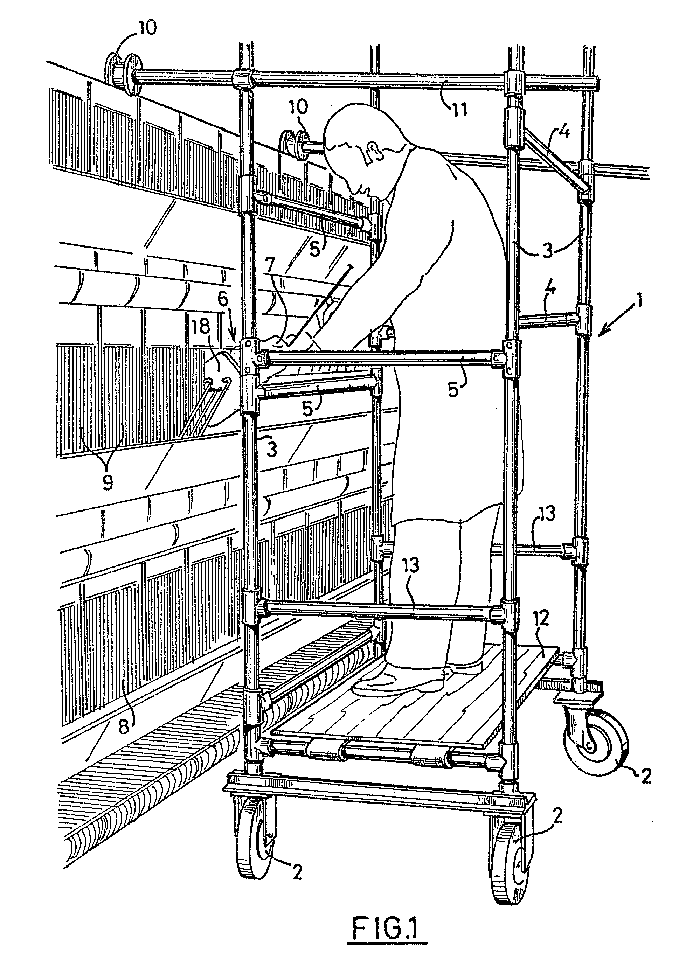

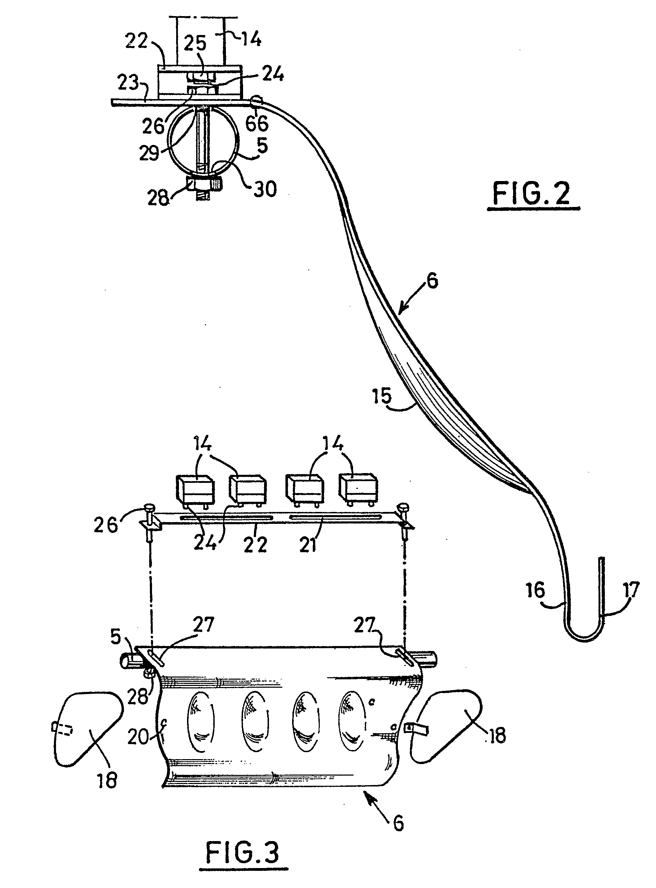

La fig. 1 montre une vue générale du dispositif selon l'invention, constitué par un chariot 1 porté par quatre roues 2 et formé de montants verticaux 3 réunis rigidement à des éléments horizontaux 4, et portant des organes tubulaires horizontaux 5 sur l'un desquels est fixé de façon réglable et amovible un organe 6 de retenue et de guidage des volatiles (schématiquement en 7) portant des moyens (voir fig. 2 et suivantes) de contention des volatiles (non représentés). Le chariot 1 peut se déplacer devant les batteries superposées 8 de cages individuelles 9 contenant les volatiles — des poules par exemple — parallèlement auxdites cages en étant guidé par des roulettes 10 fixées sur les prolongements de bras horizontaux 11 montés à la partie supérieure du chariot 1. Ce dernier comporte, en outre, un plateau 12 apte à porter l'opérateur et pouvant être placé à différentes hauteurs, par exemple sur des montants latéraux, tels que 13, réglables en hauteur de façon classique non représentée sur les montants verticaux 3, ce qui permet à l'opérateur d'être assis ou debout selon le niveau de la batterie concernée.

Sur les fig. 2 et 3, on n'a représenté — pour la clarté du dessin — que l'organe 6 de retenue et de guidage des volatiles et des moyens 14 de contention de ces derniers, qui en sont solidaires comme cela sera décrit plus loin.

L'organe 6 de retenue et de guidage des volatiles est constitué par une planchette incurvée possédant une forme de toboggan dont la partie centrale peut comporter des empreintes 15 (en pointillés) légèrement en creux permettant un meilleur soutien et positionnement des volatiles et dont le bord inférieur 16 est vertical (trait plein) ou bien peut comporter une sorte de gouttière 17 servant par exemple à récolter la fiente des volatiles.

La planchette 6 comporte, en outre, des flasques latéraux amovibles 18, fixés sur les côtés latéraux de la planchette par les languettes 19 pénétrant dans des trous 20 de ladite planchette dont la largeur correspond à un nombre déterminé (ici quatre) de volatiles. Cette planchette est disposée en contrebas des moyens 14 de contention des volatiles, décrits ci-après de façon détaillée, et qui sont fixés de façon réglable latéralement dans une glissière 21 d'une cornière horizontale allongée et plate 22 solidaire d'une manière classique non représentée de la partie horizontale 23 de la planchette 6. Les moyens de contention 14 sont fixés à la cornière 22 par des tiges filetées 24, situées à leur partie inférieure et traversant la glissière 21, et par des écrous 25.

La cornière 22 est rendue solidaire de la partie horizontale de la planchette 6 par des organes de fixation tels que des boulons 26 traversant des trous non représentés ménagés dans les extrémités de préférence recourbées (fig. 3) de la cornière et des lumières allongées 27 ménagées dans la planchette 6, de sorte que cette dernière peut être réglée en position par rapport à la tubulure 5 de support au moyen du serrage d'écrous molletés 28. En outre, la tubulure 5 peut comporter, au droit de chaque boulon 26, un trou supérieur 29 d'un diamètre juste suffisant pour le passage de la tige du boulon 26, alors que le trou inférieur 30 est en forme de lumière allongée, par exemple ovale. Ces dispositions permettent ainsi de régler la planchette 6, d'une part, latéralement par rapport à la tubulure de support 5 et, d'autre part, obliquement dans une position plus ou moins inclinée par rapport au chariot 1 et aux cages 9.

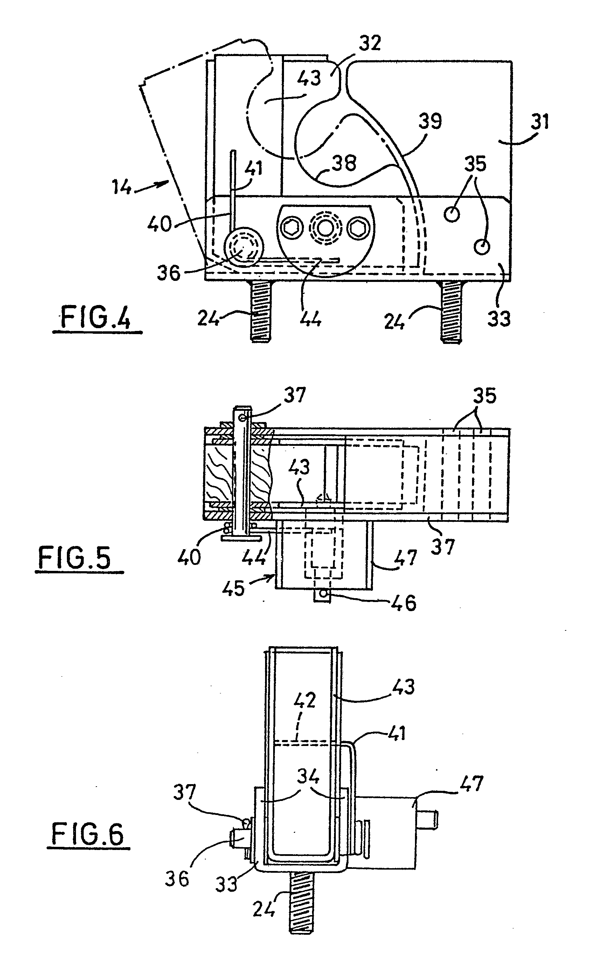

Ci-après, en se référant aux fig. 4 à 6, on va décrire les moyens 14 de contention de chaque volatile des dispositifs conformes à l'invention. Ces moyens 14 se composent essentiellement d'une pince 31 fixe en forme de sabot ou de tampon plein vertical et d'une pince 32 mobile en forme de sabot ou de tampon plein vertical, lesdites pinces étant constituées de préférence en un matériau ne blessant pas les volatiles, tel que du caoutchouc. La pince fixe 31 est solidaire d'un support 33 en forme de cornière en U, en coupe transversale possédant des flasques latéraux 34, d'une hauteur inférieure à celle des pinces 31, 32, à l'aide de boulons 35. La pince mobile 32 peut pivoter autour d'un axe horizontal 36 fixé en rotation libre à l'autre extrémité du support 33, en étant retenue par une goupille 37, entre une position fermée (représentée en trait plein) et une position ouverte (représentée en trait mixte sur la fig. 4), ladite pince circulant librement entre les flasques 34 du support 33.

La pince mobile 32 comporte un évidement transversal 38 de forme évasée appropriée, tandis que la surface de la pince 31 tournée vers la pince 32 possède un profil légèrement courbe 39. Le bord inférieur de la pince 32, situé au-dessous de l'ouverture 38, possède une forme adaptée à celle du profil 39, de sorte qu'à l'état fermé, les deux pinces délimitent une ouverture de préférence en forme de poire en coupe transversale permettant de loger les deux pattes d'un volatile.

En outre, les moyens de contention 14 comportent un ressort de rappel 40 servant à repousser en permanence en position ouverte la pince 32; le ressort est partiellement enroulé autour de l'axe 36 et comporte une branche supérieure 41, dont une partie coudée horizontale 42 est solidaire de flasques latéraux rigides 43, enserrant la pince 32 et dont celle-ci est solidaire, et une branche inférieure 44 fixée dans l'un des flasques 33, entre lesquels pivote la pince 32.

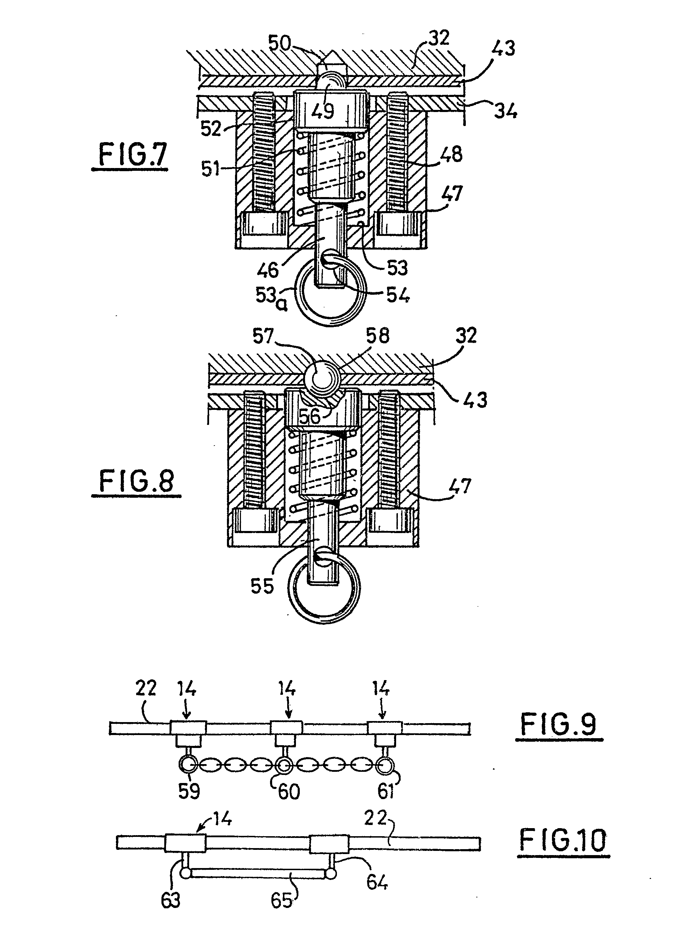

Par ailleurs, lesdits moyens de contention 14 prévus pour chaque volatile comportent un système 45 de verrouillage de la pince mobile 32 en position fermée. Ce système, représenté de façon plus détaillée sur la fig. 7, se compose d'une biellette 46 montée avec possibilité de glissement longitudinal en translation perpendiculairement aux pinces 31, 32, dans un bloc moulé 47 fixé au support 33 des pinces au moyen de boulons 48. La biellette 46 comporte une extrémité intérieure 49 saillante en forme de téton s'engageant à l'état fermé dans une cavité correspondante 50 ménagée dans le flasque latéral 43 de la pince mobile 32, en étant soumise à l'action permanente d'un ressort de pression 51 intercalé entre un épaulement 52 de la biellette et le fond 53 du bloc moulé.

Dans cette version, lorsque l'on tire sur la biellette 46 à l'aide d'un anneau 53 accroché dans un trou 54 de la biellette, le téton 49 sort de la cavité 50, ce qui libère la pince 32 qui, étant soumise à l'action permanente de rappel du ressort 40, est relevée automatiquement en position ouverte.

La fig. 8 montre une variante de réalisation du système de verrouillage de la pince mobile, qui se compose ici d'une biellette 55, dont l'extrémité intérieure comporte une cavité hémisphérique 56, apte à loger partiellement une bille 57 en partie logée dans une cavité correspondante 58 ménagée dans le flasque 43, ladite bille étant retenue par des moyens appropriés non représentés au flasque 43 ou pouvant même être remplacée ainsi que la cavité 58 par un simple renflement hémisphérique (non représenté) du flasque 43.

Dans cette forme de réalisation, le déblocage de la pince mobile 32 s'effectue de la même manière que précédemment en tirant sur l'anneau 53.

Sur la fig. 9, on a représenté le cas où la cornière 22 porte plusieurs moyens 14 de contention dont les anneaux 59, 60, 61 des systèmes de verrouillage associés des pinces mobiles sont reliés par une chaînette 62 permettant éventuellement de tirer simultanément sur l'ensemble des anneaux en libérant ainsi plusieurs volatiles, après leur insémination.

Sur la fig. 10, on a représenté le cas où les moyens 14 de contention des volatiles sont réunis, au niveau des extrémités extérieures de leurs biellettes 63, 64, par une barrette 65 articulée par tout moyen approprié connu, permettant soit de libérer deux volatiles simultanément, soit d'en libérer un, tout en maintenant l'autre dans le second système de contention.

Enfin, selon une autre variante de réalisation de l'invention, la planchette 6 pourrait non pas être solidaire rigidement de la cornière 22, mais être articulée par tout moyen approprié connu, le réglage en position inclinée étant alors réalisé à l'aide de dispositifs (non représentés) vissables par exemple sur des montants du chariot 1.

Selon une variante de réalisation, la pince 31 peut être réglée en translation par rapport à la pince 32, mobile angulairement, afin de faire varier la largeur de l'évidement 38 pour adapter celui-ci à la grosseur des pattes des volatiles. Ce réglage peut s'effectuer aisément en prévoyant dans le support 33 des lumières permettant le réglage de la pince 31 qui pourrait ainsi être fixée par des boulons en toute position relative par rapport à la pince 32.


**Revendications**

1. Dispositif de contention d'oiseaux élevés, servant à l'opération d'insémination de volailles femelles telles que poules, pintades, dindes ou autres, et/ou à une opération de récolte de la semence des mâles, du type comportant des moyens verrouillables de contention temporaire des volatiles et un moyen de transport apte à être déplacé manuellement, caractérisé en ce que ledit moyen de transport est constitué par un chariot mobile le long des batteries (8) contenant les volatiles (7) et comportant des moyens de guidage (10) associés à la structure de ces batteries, ce chariot portant un organe (6) de soutien et de positionnement des volatiles durant l'opération et de guidage de ceux-ci vers leur batterie lors de leur libération après l'opération, les moyens de contention verrouillables (14) étant solidaires et réglables en position sur cet organe de soutien et de guidage (6), tout en étant réglables par ailleurs pour s'adapter aux volatiles.

2. Dispositif selon la revendication 1, caractérisé en ce que l'organe (6) de soutien, de positionnement et de guidage des volatiles est une planchette en forme de toboggan disposée en contrebas des moyens (14) de contention des volatiles (7) et dont l'inclinaison est réglable par rapport au chariot (1).

3. Dispositif selon la revendication 2, caractérisé en ce que la planchette (6) comporte des flasques latéraux (18) et des empreintes (15) légèrement en creux, prévus en un nombre égal à celui des moyens (14) de contention des volatiles, les flasques et/ou les empreintes servant à guider les volatiles (7) tombant sous l'action de leur propre poids lorsqu'ils sont libérés desdits moyens (14) de contention.

4. Dispositif selon l'une quelconque des revendications 1 à 3, caractérisé en ce que les moyens (14) de contention pour chaque volatile (7) sont constitués par des pinces verticales (31, 32) dont l'une (31) est fixe et dont l'autre (32) est mobile angulairement dans un support (33) réglable sur une cornière horizontale (22) solidaire de la planchette (6) ou directement sur celle-ci.

5. Dispositif selon la revendication 4, caractérisé en ce que les pinces (31, 32) sont constituées par un sabot fixe (31) solidaire du support réglable (33) et par un sabot (32) mobile angulairement dans un plan vertical autour d'un axe horizontal (36) et sollicité pour s'écarter du sabot fixe par l'action d'un ressort de rappel (40), le sabot mobile (32) comportant une partie évidée (38) telle que, dans sa position fermée lorsqu'il est appliqué contre le sabot fixe (31), il délimite avec ce dernier une ouverture à peu près en forme de poire en coupe transversale verticale.

6. Dispositif selon la revendication 5, caractérisé en ce que les pinces (31, 32) sont constituées d'un matériau ne blessant pas les volatiles (7), par exemple du caoutchouc.

7. Dispositif selon l'une quelconque des revendications 2 à 6, caractérisé en ce que les moyens (14) de contention de chaque volatile (7) sont réglables latéralement dans une glissière (21) de la planchette et peuvent y être bloqués en position à l'aide d'organes de serrage tels que des boulons (25).

8. Dispositif selon l'une quelconque des revendications 4 à 7, caractérisé en ce que chaque ensemble de pinces (31, 32) constituant les moyens (14) de contention d'un volatile comporte un système (45) de verrouillage de la pince mobile (32) en position fermée dans laquelle cette dernière est appliquée contre la pince fixe (31).

9. Dispositif selon la revendication 8, caractérisé en ce que le système de verrouillage (45) est constitué par une biellette (46) montée avec possibilité de glissement longitudinal en translation dans un bloc moulé (47), fixé par des boulons (48) à l'extrémité du support (33) des pinces, et dont l'extrémité intérieure est en forme de téton (49) saillant s'engageant à l'état fermé dans une cavité correspondante (50) d'un flasque latéral (43) de la pince mobile (32) sous l'action permanente d'un ressort de pression (51) intercalé entre un épaulement (52) de la biellette (46) et le fond (53) du bloc moulé.

10. Dispositif selon la revendication 8, caractérisé en ce que le système de verrouillage est constitué par une biellette (55) possédant une cavité hémisphérique (56) apte à loger partiellement une bille (57) logée partiellement, à l'état fermé, dans une cavité correspondante (58) d'un flasque latéral (43) de la pince mobile (32).

11. Dispositif selon l'une quelconque des revendications 1 à 10, caractérisé en ce que chaque ensemble de pinces (31, 32), dont l'une (32) est mobile, constituant les moyens de contention (14) d'un volatile (7) comporte un organe (53a) de commande de déblocage de la pince mobile (32) constitué par un anneau de traction accroché dans un trou (54) de l'extrémité libre de la biellette (46, 55) formant le moyen de verrouillage de la pince mobile (32).

12. Dispositif selon la revendication 11, caractérisé en ce que les anneaux des systèmes de déblocage de plusieurs moyens (14) de contention prévus pour plusieurs volatiles (7) sont réunis par une chaînette (62).

13. Dispositif selon la revendication 11, caractérisé en ce que les biellettes (63, 64) de verrouillage des moyens (14) de contention sont réunies par couples par une barrette horizontale (65) articulée à ses extrémités sur les extrémités libres des deux biellettes (63, 64) de chaque couple.

14. Dispositif selon l'une quelconque des revendications 2 à 13, caractérisé en ce que la planchette (6) est reliée rigidement aux moyens (14) de contention des volatiles (7) dont la cornière (22) de soutien est fixée par ses extrémités à la planchette (6) par des boulons (26) s'engageant dans des lumières (27) de la planchette et des trous appropriés (29, 30) de tubulures horizontales (5) de support situées sur le chariot, le trou supérieur (29) étant d'un diamètre juste suffisant pour le passage du boulon, tandis que le trou inférieur (30) est en forme de lumière élargie, par exemple ovale, les boulons (26) portant chacun un écrou molleté de serrage (28) permettant de les bloquer en position sur la tubulure de support (5).

15. Dispositif selon l'une quelconque des revendications 2 à 13, caractérisé en ce que la planchette (6) est articulée à la cornière (22) de soutien des moyens de contention (14) des volatiles et est réglable en position inclinée à l'aide de dispositifs vissables sur des montants du chariot (1).

16. Dispositif selon la revendication 5, caractérisé en ce que le ressort de rappel (40) de la pince mobile (32) en position ouverte est un ressort en V enroulé partiellement de façon lâche sur l'axe (36) de pivotement de la pince mobile (32) et dont une branche (41) est fixée par une extrémité dans les flasques latéraux (43) de la pince mobile (32) et dont l'autre branche (43) est fixée dans le bloc moulé (47).

17. Dispositif selon l'une quelconque des revendications 1 à 6, caractérisé en ce que le chariot (1) est guidé par rapport aux batteries (8) au moyen de roulettes (10) montées sur des bras horizontaux rigides (11) et ajustables de la structure du chariot formée de tubes horizontaux (13, 14) et de tubes verticaux (3) et supportant plusieurs tubulures horizontales de support (5) servant à y fixer l'organe de soutien et de guidage (6) muni des moyens (14) de contention des volatiles.

18. Dispositif selon la revendication 5, caractérisé en ce que la pince fixe (31) est réglable en position par rapport à la pince (32) mobile angulairement pour faire varier la largeur de l'évidement (38) défini par ces deux pinces en position fermée.

## Claims

1. Restraining device for adult birds for inseminating female poultry such as hens, guinea hens, turkey hens or others, and/or for collecting sperm from males, of the type comprising lockable temporary restraining means for the birds and transport means adapted to be displaced manually, characterised in that the said transport means comprise a trolley which moves along the batteries (8) containing the birds (7) and comprising guide means (10) associated with the structure of the batteries, the trolley supporting a member (6) for supporting and positioning the birds during the operation and means for guiding the birds to their battery when they are released after the operation, the lockable restraining means (14) being rigid and position adjustable on this support and guiding member (6), whilst, in addition, being adjustable to adapt to the birds.

2. Device according to claim 1, characterised in that the bird support, positioning and guiding device (6) is a toboggan shaped sheet disposed on a lower level than the restraining means (14) for the birds (7) and the angle of inclination of which is adjustable relative to the trolley (1).

3. Device according to claim 2, characterised in that the board (6) comprises lateral end plates (18) and slightly recessed portions (15), provided equal in number to that of the bird restraining means (14), the end plates and/or recessed portions being for guiding the birds (7) which fall as a result of their own weight when they are released from the said restraining means (14).

4. Device according to any one of claims 1 to 3,

characterised in that the restraining means (14) for each bird (7) comprise vertical grips (31, 32) one (31) of which is fixed and the other (32) of which is displaceable angularly in a support (33) which is adjustable on a horizontal corner plate (22) rigid with the board (6) or directly on it.

5. Device according to claim 4, characterised in that the grips (31, 32) comprise a fixed shoe (31) which is rigid with the adjustable support (33) and a shoe (32) which is angularly displaceable in a vertical plane about a horizontal axis (36) and acted upon in order to be moved away from the fixed shoe by the action of a return spring (40), the moving shoe (32) comprising a recessed portion (38) such that, in the closed position when it is pressed against the fixed shoe (31), it defines an opening with the latter which is approximately pear shaped in vertical cross section.

6. Device according to claim 5, characterised in that the grips (31, 32) are constituted of a material which does not harm the birds (7), for example rubber.

7. Device according to any one of claims 2 to 6, characterised in that the restraining means (14) for each bird (7) are laterally adjustable in a gliding channel (21) of the board and can be secured therein in position using clamping members such as screw bolts (25).

8. Device according to any one of claims 4 to 7, characterised in that each set of grips (31, 32) constituting restraining means (14) for one bird comprises a locking system (45) for the moving grip (32) in the closed position in which the latter is pressed against the fixed grip (31).

9. Device according to claim 8, characterised in that the locking system (45) comprises a link rod (46) mounted so that it can slide longitudinally during displacement in a moulded block (47), secured by screw bolts (48) at the end of the support (33) of the grips, and the interior end of which is in the form of a projecting dog point which engages in the closed position in a corresponding cavity (50) of a lateral end plate (43) of the moving grip (32) under the continuous action of a pressure spring (51) inserted between a shoulder (52) of the link rod (46) and the base (53) of the moulded block.

10. Device according to claim 8, characterised in that the locking system comprises a link rod (55) which has a hemispherical cavity (56) adapted to partially seat a ball bearing, which is partially seated, in the closed position, in a corresponding cavity (58) of a lateral end plate (43) of the moving grip (32).

11. Device according to any one of claims 1 to 10, characterised in that each set of grips (31, 32) one (32) of which is movable, constituting restraining means for one bird (7) comprises a control device (53a) for unlocking the moving grip (32) constituted by a traction ring hooked in a hole (54) of the free end of the link rod (46, 55) forming the locking means for the moving grip (32).

12. Device according to claim 11, characterised in that the rings of the unlocking systems of a plurality of restraining means (14) provided for a plurality of birds (7) are connected by a small chain (62).

13. Device according to claim 11, characterised in that the locking link rods (63, 64) of the restraining means (14) are connected in pairs by a horizontal connector bar (65) articulated at its ends on the free ends of the two links (63, 64) of each pair.

14. Device according to any one of claims 2 to 13, characterised in that the board (6) is connected rigidly to the restraining means (14) for the birds (7), the supporting corner plate (22) of which is secured at its ends to the board (6) by screw bolts (26) engaging in the slots (27) of the board and the appropriate holes (29, 30) of horizontal supporting connection members (5) disposed on the trolley, the upper hole having a diameter which is exactly adequate for the screw bolt to pass through, whereas the lower hole (30) is in the form of an enlarged slot, for example oval, the screw bolts (26) each supporting a milled securing bolt (28) which enables them to be locked in position on the supporting connection piece (5).

15. Device according to any one of claims 2 to 13, characterised in that the sheet (6) is articulated on the supporting corner plate (22) of the restraining means (14) for the birds and is adjustable in the inclined position using devices which can be screwed on the vertical members of the trolley (1).

16. Device according to claim 5, characterised in that the return spring (40) of the moving grip (32) in the open position is a spring in the form of a partly wound V in a loose manner on the pivot axis (36) of the moving grip (32) and one leg (41) of which is secured at one end in the lateral end plates (43) of the moving grip (32) and the other leg (43) of which is secured in the moulded block (47).

17. Device according to any one of claims 1 to 6, characterised in that the trolley (1) is guided relative to the batteries (8) by means of castors (10) mounted on rigid and adjustable horizontal arms (11) of the structure of the trolley formed from horizontal tubes (13, 14) and vertical tubes (3) and supporting a plurality of horizontal supporting connection pieces (5) which are used to secure thereto the support and guide member (6) provided with restraining means (14) for the birds.

18. Device according to claim 5, characterised in that the fixed grip (31) is position adjustable relative to the angularly moving grip (32) in order to vary the width of the recess (38) defined by the two grips in the closed position.

**Patentansprüche**

1. Anordnung zum Festhalten von gezüchteten Vögeln zur Besamung von weiblichem Geflügel, wie z.B. von Hühnern, Perlhühnern, Truthennen oder anderen, und/oder zur Samengewinnung von männlichem Geflügel, mit verriegelbaren Geflügel-Haltevorrichtungen zum zeitweiligen Festhalten der Geflügeltiere und mit einer von Hand verfahrbaren Transportvorrichtung, dadurch gekennzeichnet, dass die Transportvorrichtung einen Wagen enthält, der längs der das Geflügel (7) aufnehmenden Käfige (8) beweglich ist und Führungsmittel (10) besitzt, welche mit den Käfigaufbauten zusammenwirken, dass der Wagen ein Stütz- und Führungsorgan (6) zum Abstützen und Positionieren der Geflügeltiere während des Vorganges der Besamung/Samenentnahme und zur Rückführung der Tiere in ihren Käfig nach der auf die Besamung/Samenentnahme erfolgenden Freigabe enthält, dass die Geflügel-Haltevorrichtungen (14) in der Position veränderlich auf dem Stütz- und Führungsorgan (6) befestigbar und ausserdem zur Anpassung an die Geflügeltiere veränderlich sind.

2. Anordnung nach Anspruch 1, dadurch gekennzeichnet, dass das Stütz- und Führungsorgan eine Rutschfläche (6) in Form einer Rutschbahn unterhalb der Geflügel-Haltevorrichtungen (14) enthält, deren Neigung relativ zum Wagen (1) verstellbar ist.

3. Anordnung nach Anspruch 2, dadurch gekennzeichnet, dass die Rutschfläche (6) Seitenwände (18) und leichte Vertiefungen (15) in einer den Geflügel-Haltevorrichtungen (14) entsprechenden Anzahl enthält, dass die Seitenwände (18) und/oder die Vertiefungen zum Führen der Geflügeltiere (7) dienen, welche unter ihrem Eigengewicht herabfallen, nachdem sie aus den Haltevorrichtungen (14) befreit worden sind.

4. Anordnung nach einem der Ansprüche 1 bis 3, dadurch gekennzeichnet, dass die Haltevorrichtungen (14) für jedes Geflügeltier (7) aus vertikalen Backen (31, 32) bestehen, deren eine (31) fest und deren andere (32) in einer Halterung (33) verschwenkbar ist, die auf einem fest mit der Rutschfläche (6) verbundenen horizontalen Winkeleisen (22) oder direkt auf der Rutschfläche verstellbar angeordnet ist.

5. Anordnung nach Anspruch 4, dadurch gekennzeichnet, dass die Backen (31, 32) aus einer fest mit der verstellbaren Halterung (33) verbundenen Festbacke (31) und einer Schwenkbacke (32) bestehen, die in einer vertikalen Ebene um eine horizontale Achse (36) verschwenkbar ist und sich von der Festbacke mittels einer Rückstellfeder (40) entfernt, dass die Schwenkbacke (32) eine Ausnehmung (38) besitzt, derart, dass die Schwenkbacke in einer gegen die Festbacke (31) anliegenden geschlossenen Position mit der Festbacke eine im vertikalen Querschnitt näherungsweise birnenförmige Öffnung bildet.

6. Anordnung nach Anspruch 5, dadurch gekennzeichnet, dass die Backen (31, 32) aus einem die Geflügeltiere (7) nicht verletzenden Material, z.B. aus Gummi, bestehen.

7. Anordnung nach einem der Ansprüche 2 bis 6, dadurch gekennzeichnet, dass die Geflügel-Haltevorrichtungen (14) lateral in einer Gleitführung (21) des Rutschbrettes verstellbar sind und mittels Befestigungselementen, z.B. mittels Schrauben (25), festsetzbar sind.

8. Anordnung nach einem der Ansprüche 4 bis 7, dadurch gekennzeichnet, dass die Backen (31, 32), welche die Haltevorrichtungen (14) für ein Geflügeltier bilden, ein Verriegelsystem (45) zum Verriegeln der Schwenkbacke (32) in ihrer geschlossenen Position enthalten, in welcher die Schwenkbacke gegen die Festbacke (31) anliegt.

9. Anordnung nach Anspruch 8, dadurch gekennzeichnet, dass das Verriegelsystem (45) einen Schubstift (46) enthält, der längsverschiebbar in einem Formteil (47) gelagert ist, welches mittels Schrauben (48) aussen an der Halterung (33) der Backen befestigt ist, und dass der innen liegende Endabschnitt des Schubstiftes als vorspringendes Zentrierstück (49) ausgebildet ist, welches in geschlossenem Zustand in eine entsprechende Ausnehmung (50) einer Seitenwand (43) der Schwenkbacke (32) unter der ständigen Wirkung einer Druckfeder (51) hineingreift, die zwischen einer Schulter (52) des Schubstiftes (46) und dem Deckel (53) des Formteiles angeordnet ist.

10. Anordnung nach Anspruch 8, dadurch gekennzeichnet, dass das Verriegelungssystem einen Schubstift (55) mit einem halbkugelförmigen Hohlraum (56) zur teilweisen Aufnahme einer Kugel (57) enthält, die im geschlossenen Zustand teilweise in einer entsprechenden Ausnehmung (58) der Seitenwand (43) der Schwenkbacke (32) lagert.

11. Anordnung nach einem der Ansprüche 1 bis 10, dadurch gekennzeichnet, dass die Backen (31, 32), deren eine (32) beweglich ist, und welche die Haltevorrichtungen (14) zum Festhalten eines Geflügeltieres (7) darstellen, ein Entriegelungsorgan (53a) zum Entriegeln der Schwenkbacke (32) besitzen, und dass das Entriegelungsorgan (53a) als Zugring ausgebildet ist, der in einer Bohrung (54) am freien Ende des das Verriegelungssystem der Schwenkbacke (32) bildenden Schubstifts (46, 55) ausgebildet ist.

12. Anordnung nach Anspruch 11, dadurch gekennzeichnet, dass die Zugringe der Entriegelungsorgane zum Entriegeln mehrerer Haltevorrichtungen (14) für mehrere Geflügeltiere (7) mittels einer Kette (62) verbunden sind.

13. Anordnung nach Anspruch 11, dadurch gekennzeichnet, dass die Schubstifte (63, 64) der Haltevorrichtungen (14) paarweise mittels einer horizontalen Stange (65) verbunden sind, die an ihren Enden auf den freien Enden der beiden Schubstifte (63, 64) jedes Schubstifte-Paares angelenkt ist.

14. Anordnung nach einem der Ansprüche 2 bis 13, dadurch gekennzeichnet, dass die Rutschfläche (6) fest mit den Haltevorrichtungen (14) verbunden ist, deren Winkeleisen (22) an seinen Enden an der Rutschfläche (6) mittels Schrauben (26) befestigt ist, die in Schlitze (27) der Rutschfläche und geeignete Bohrungen (29, 30) der auf dem Wagen angeordneten horizontalen Rohrstreben (5) hineinragen, dass die obere Bohrung (29) einen gerade zur Aufnahme der Schraube ausreichenden Durchmesser besitzt, während die untere Bohrung (30) als vergrösserter Schlitz, z.B. oval, ausgebildet ist, und dass die Schrauben (26) je eine Rändelschraube (28) zur Befestigung der Schrauben an den Rohrstreben (5) besitzen.

15. Anordnung nach einem der Ansprüche 2 bis 13, dadurch gekennzeichnet, dass die Rutschfläche (6) am Winkeleisen (22) der Haltevorrichtungen (14) schwenkbar angeordnet ist und mittels an den Aufbauten des Wagens (1) verschraubbaren Einrichtungen in seiner Neigung verstellbar ist.

16. Anordnung nach Anspruch 5, dadurch gekennzeichnet, dass die Rückstellfeder (40) der Schwenkbacke (32) in offener Position eine V-förmige Feder ist, die teilweise lose auf die Schwenkachse (36) der Schwenkbacke (32) aufgewickelt ist, und deren einer Arm (41) an seinem Ende fest in den Seitenwänden (43) der Schwenkbacke (32) angeordnet ist, und deren anderer Arm (44) am Formteil (47) befestigt ist.

17. Anordnung nach einem der Ansprüche 1 bis 6, dadurch gekennzeichnet, dass der Wagen (1) relativ zu den Käfigen (8) mittels Rollen (10) geführt ist, die an festen Horizontalarmen (11) angeordnet sind und am Wagengerüst verstellbar sind, welches von horizontalen Rohren (13, 14) und vertikalen Rohren (3) gebildet ist und mehrere horizontale Rohrstreben (5) aufweist, die zur Befestigung des Stütz- und Führungsorgans (6) dienen, welches die Geflügel-Haltevorrichtungen (14) trägt.

18. Anordnung nach Anspruch 5, dadurch gekennzeichnet, dass die Position der Festbacke (31) relativ zur Schwenkbacke (32) verstellbar ist, um die Grösse der Ausnehmung (38) zu verändern, die in der geschlossenen Stellung durch die beiden Backen gebildet wird.

FIG.1

0 084 741

FIG.2

FIG.3

11

FIG.4

FIG.5

FIG.6

FIG.7

50   32   43   34   52   51   49   48   47   46   53   53a   54

FIG.8

57   58   32   43   56   47   55

22   14   14   14
FIG.9
59   60   61

14   22
FIG.10
63   65   64